# EUROPÄISCHE PATENTSCHRIFT

(11) **EP 0 537 501 B1**
(45) Veröffentlichungstag und Bekanntmachung des Hinweises auf die Patenterteilung: **01.03.1995**
(21) Anmeldenummer: 92116055.2
(22) Anmeldetag: 19.09.1992
(51) Int. Cl.: H01G 4/008

(54) **Verfahren zur Herstellung elektronischer Bauteile aus einem Verbund aus Nichtleiter- und Leiterschichten**
Manufacturing method of electronical components having conductive and non-conductive layers joined together
Méthode de fabrication de composant électroniques composés de couches conductrices et non-conductrices

(30) Priorität: 18.10.1991 FR 9112891
(43) Veröffentlichungstag der Anmeldung: 21.04.1993
(73) Patentinhaber: Degussa Aktiengesellschaft, 60311 Frankfurt (DE)
(72) Erfinder: Dauger, Alain, F-87220 Boisseuil (FR); Labregere, Gerard, F-87170 Isle (FR); Roche, Guy, F-87170 Isle (FR); Guinbretiere, Rene, F-87000 Limoges (FR)

(56) Entgegenhaltungen:
- EP-A- 0 064 211
- EP-A- 0 125 831
- PATENT ABSTRACTS OF JAPAN vol. 4, no. 158 (M-039)5. November 1980 & JP-A-55 107 701

## Beschreibung

Die Erfindung betrifft ein Verfahren zur Herstellung von elektronischen Bauteilen, insbesondere von keramischen Vielschichtkondensatoren, die einen Verbund aus Nichtleiter- und Leiterschichten bilden. Dieses Verfahren umfaßt folgende Schritte: (a) Auftrag einer Schicht aus in einem organischen Medium dispergiertem Metallpulver oder Metallegierungspulver auf einen gegossenen, ungebrannten Körper aus sinterbarem Keramikmaterial und (b) Sintern des derart beschichteten Körpers bei einer Temperatur, die mindestens der Sintertemperatur des Keramikmaterials entspricht und die unterhalb des Schmelzpunkts der Metalle oder Metallegierungen liegt. Ein solches Verfahren ist z.B. aus der EP-A-0 125 831 bekannt.

Im Bereich der elektronischen Bauteile und der Hybridmikroelektronik besteht häufig die Notwendigkeit, eine Leiterschicht mit einer Nichtleiterschicht zu verbinden. Keramische Vielschichtkondensatoren sind ein Beispiel für solche Systeme.

Zur Herstellung von elektronischen Bauteilen dieses Typs können Träger unterschiedlicher Form verwendet werden; jedoch werden gegossene Blätter oder Bänder bevorzugt. Fachleute sind in der Lage, die sinterbaren Keramikmaterialien auszuwählen; es handelt sich z. B. um Aluminiumoxid, dem eine bestimmte Menge anderer Oxide zugegeben wird, oder um dielektrische Verbindungen, wie Barium-, Strontium-, Calzium-, Magnesiumtitanate, zu denen wiederum festgelegte Mengen anderer Oxide sowie Kombinationen von Oxiden hinzugegeben werden. Anschließend werden die genannten Stoffe zu rohen Blättern oder Bändern geformt. Nach der ersten Schicht können dann abwechselnd die ungebrannte Keramik und die Leiterschicht auf Basis der Metalle oder Metallegierungen aufgebracht werden. Auf diese Weise erhält man einen Block aus mehreren Schichten, der geschnitten und anschließend gesintert wird.

Für die Leiterschichten verwendet man als Metall oder Metallegierung vorzugsweise Pulver der Edelmetalle aus der Reihe Silber, Palladium, Gold und Platin sowie ihrer binären und ternären Legierungen. In manchen Fällen werden auch die unedlen Metalle Nickel und Kupfer verwendet. Ag-Pd-Legierungen sind besonders interessant, weil die Temperatur des festen Aggregatzustandes und die des flüssigen kontinuierlich vom Schmelzpunkt des Silbers (961°C) bis zum Schmelzpunkt des Palladiums (1552°C) ansteigen.

Im Falle der keramischen Vielschichtkondensatoren wird das Verhältnis Pd/Ag so gewählt, daß der Schmelzpunkt über der Sintertemperatur der Nichtleiterschicht liegt um zu verhindern, daß die Elektrode während des Sintervorgangs schmilzt.

Bisher wurden für die Herstellung der Elektrodenschichten der obengenannten Kondensatoren Edelmetallpulver oder Legierungen von Edelmetallen in Form von extrem kleinen Teilchen mit einer hohen spezifischen Oberfläche verwendet. Diese Pulver wurden durch einfache chemische Reduktion metallischer Salze hergestellt: Durchmesser der Teilchen 0,001 bis 0,1 »m, spezifische Oberfläche 10 bis 40 m²/g je nach verwendetem Reduktionsmittel. Die mit einem solchen Pulver hergestellten Chips zeigen nach dem Sintern ein Aufblättern, das sich nachteilig auswirkt. Um für den beschriebenen Anwendungszweck geeignetere Pulver herzustellen, wurden sie thermomechanisch behandelt, die Verbesserung hielt sich aber in Grenzen.

Die Antragstellerin hat das Verfahren im Detail untersucht:

Die Metalle Ag und Pd bilden Oxide, wenn sie an der Luft gesintert werden. Ag₂O stellt bei Raumtemperatur und bis zu 300°C die stabilste Oxydationsphase des Silbers dar. Die Oxidbildung wird jedoch durch die Atmosphäre und die Abnahme der spezifischen Oberfläche des Silbers während der ersten Sinterphasen behindert.

Palladium dagegen bildet leicht das Oxid PdO in der Anfangsphase des Sintervorgangs. Der Umfang der Reaktion hängt von der spezifischen Oberfläche des Metalls, der Aufheizgeschwindigkeit und dem Partialdruck an Luftsauerstoff ab. PdO mit tetragonaler kristalliner Struktur ist thermodynamisch bis ca. 800°C stabil und kehrt bei höheren Temperaturen in den metallischen Zustand zurück.

Beim Sintern der Kondensatoren kann die Oxydation des Palladiums von einer Volumenausdehnung bis zu 40% begleitet sein. Oberhalb 800°C macht sich die Reduktion von PdO zu Pd in einer Volumenverringerung bemerkbar. Beide Reaktionen verursachen Spannungen, die ein Grund für das Aufblättern sind.

Die Oxydation des Palladiums und anschließende Desoxydation wird durch Zugabe von Silber beschleunigt. Zum Beispiel erreichen Pulver, die aus 70 Gew.-% Ag und 30 Gew.-% Pd bestehen, das Oxydationsmaximum bei 520°C gegenüber 790°C ohne Silber. Das Reduktionsende von PdO wird auf die gleiche Weise von 900°C auf 700°C herabgesetzt.

Während der Brennphasen kann das feine Pulver katalytisch mit dem organischen Medium reagieren unter Bildung von warmen Punkten, wobei es zu einer raschen Entgasung, Blasenbildung und zum Aufblättern der Kondensatoren kommt. Die Schwindungseigenschaften sehr feiner Metallpulver sind in der Regel sehr ausgeprägt und können die Eigenschaften der umgebenden nichtleitenden Materialien nicht ausgleichen. Folglich bilden sich winzige Metall-"Inseln" mit der Folge der Entstehung diskontinuierlicher Metallgruppen mit schwächerer Leitfähigkeit.

Der Erfindung liegt die Aufgabe zugrunde, das aufgezeigte Problem zu lösen. Es hat sich herausgestellt, daß zur problemlosen Herstellung gattungsgemäßer elektronischer Bauteile Metallpulver verwendet werden müssen, die weniger aktiv sind als die bisher bekannten und fein genug für den Einsatz in den Pastenschichten, deren spezifische Oberfläche aber klein genug sein muß, damit die katalytische Wirkung gebremst wird.

Das nun gefundene Verfahren ist dadurch gekennzeichnet, daß man Metallpulver oder Metallegierungspulver einsetzt, deren Teilchen mikrokristallin, kugelförmig und dicht, d.h. poren- und rissefrei, sind, die eine glatte Oberfläche aufweisen und deren mittlerer Durchmesser zwischen 0,1 und 50 »m liegt.

Obwohl als Metall vorzugsweise die Edelmetalle Ag, Au, Pd und Pt und als Metallegierung die binären und ternären Legierungen der obengenannten Edelmetalle verwendet werden, können auch andere Metalle eingesetzt werden, deren Schmelzpunkt über der Sintertemperatur liegt, wie z. B. Kupfer und Nickel. Vorzugsweise werden die Metalle und Legierungen in Form von Pulvern verwendet, deren Kornspektrum im Bereich zwischen 0,1 »m und weniger als 5 »m liegt.

Die Metallpulver bestehen aus mikrokristallinen, kugelförmigen und dichten, poren- und rissefreien Teilchen mit glatter Oberfläche; die spezifische Oberfläche, die nach der BET-Methode mittels Gasadsorption bestimmt wird, entspricht der aufgrund des Kornspektrums errechneten Oberfläche.

Durch den Einsatz dieser Pulver können keramische Vielschichtkondensatoren hergestellt werden, welche weder aufblättern noch den die Leitfähigkeit der Elektroden herabsetzenden Inseleffekt zeigen. zwei in der Fachwelt wohlbekannte Nebenwirkungen der herkömmlichen Herstellverfahren. Je nachdem, welche dielektrische Verbindung eingesetzt wurde, erfolgt die Sinterung in der Regel bei Temperaturen zwischen 1000 und 1500 °C.

Nachstehend weitere Merkmale der Erfindung:

Durch abwechselnden Auftrag jeweils einer ungebrannten keramischen Schicht und einer Metall- oder Metallegierungspulver enthaltenden Schicht wird ein Schichtblock aufgebaut und anschließend gesintert.

Gemäß der vorliegenden Erfindung handelt es sich bei den elektronischen Bauteilen insbesondere um keramische Vielschichtkondensatoren, deren Elektroden vorzugsweise aus den Edelmetallen Ag, Au, Pd, Pt oder Nickel bzw. deren Legierungen bestehen.

Man erhält die erfindungsgemäßen kugelförmigen Pulver der Metalle oder Metallegierungen durch Versprühen eines Schmelzestrahls und Erstarrenlassen der Teilchen; zur Durchführung des auf diesem Prinzip beruhenden Verfahrens werden verschiedene bekannte Vorrichtungen verwendet - siehe z. B. EP-A 0 120 506, GB 952 457, GB 1 123 835. Die mittlere Korngröße der Metallpulver einschließlich der Pulver von Edelmetallen gemäß EP-A 0 120 506 schwankt zwischen 5 »m und 35 »m.

Die mit dem nachfolgend beschriebenen Verfahren hergestellten Metallpulver sind besonders geeignet. Mit diesem Verfahren können im übrigen noch feinere Pulver aus kugelförmigen Teilchen hergestellt werden, deren Kornspektrum zwischen beispielsweise 0,1 »m und weniger als 5 »m liegt.

Dieses Verfahren, das die Herstellung von Pulvern aus kugelförmigen Teilchen mit einer Korngröße im Bereich von 0,1 »m und 50 »m ermöglicht, umfaßt das Einbringen der betreffenden Metalle oder Legierungen in Form von nicht-sphärischen Teilchen in einen Ofen, Erhitzen derselben auf Temperaturen oberhalb des Schmelzpunktes und Abkühlen der erhaltenen Teilchen, damit sie erstarren, und ist dadurch gekennzeichnet, daß als Ausgangsprodukt ein Metall- oder Metallegierungspulver in Form von mikrokristallinen, nicht-sphärischen Teilchen mit einer größeren spezifischen Oberfläche als die der herzustellenden Pulver verwendet wird, das Ausgangsprodukt in einem reaktionsträgen Trägergas suspendiert (Pulverwolke), diese Suspension in einen rohrförmigen Ofen mit externer Beheizung eingeführt und nach dem Durchströmen der Heizzonen des Ofens abgekühlt und anschließend das Pulver aus kugelförmigen Teilchen mit Hilfe bekannter Methoden aus der Suspension abgetrennt wird. Die Heizzone wird vorzugsweise auf eine Temperatur eingestellt, die 100 bis 250 °C über der Schmelztemperatur liegt.

Das Verfahren zur Herstellung erfindungsgemäß bevorzugt zu verwendender Pulver wird anhand der Figuren näher erläutert:
- Fig. 1 stellt ein Ausgangspulver dar, bestehend aus einer Silber-/Palladium-Legierung mit 30 Gew.-% Pd und 70 Gew.-% Ag
- Fig. 2 zeigt erfindungsgemäß zu verwendende vollkommen kugelförmige Teilchen (Ag/Pd).
- Fig. 3 zeigt in schematischer Darstellung einen Längsschnitt durch eine Anlage zur Herstellung der erfindungsgemäß bevorzugt zu verwendenden Metall- oder Metallegierungspulver aus Pulvern nicht-sphärischer Teilchen.

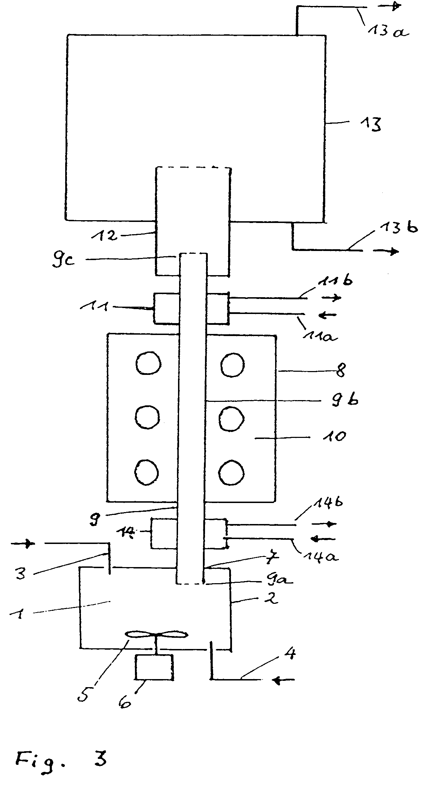

Die Anlage gemäß Fig. 3 enthält eine Vorrichtung zur Suspendierung des Pulvers (1), einen röhrenförmigen Ofen (8), eine oder mehrere Vorrichtungen zum Abkühlen der Suspension (11) und eine Vorrichtung (13), in der das erhaltene Pulver vom Trägergas getrennt und zurückgewonnen wird; die Vorrichtung (1) umfaßt ein luftdichtes Gehäuse (2), ein System zum Einfüllen des Pulvers (3), mindestens eine Trägergaszufuhr (4), eine Vorrichtung (5, 6) zum intensiven Mischen des Pulvers mit dem Gas und einen Ausgang (7), der mit dem Anfang (9a) des Rohres (9) des röhrenförmigen Ofens (8) verbunden ist; der Bereich (9b) des Rohres (9) ist mit einer oder mehreren Heizvorrichtungen (10) umgeben, die Abkühlvorrichtung oder -vorrichtungen (11) mit der Zu- und Ableitung (11a und 11b) für das Kühlmedium sind innen oder außen am Rohr (9) zwischen der Heizzone (9b) und dem Rohrausgang (9c) und/oder gegebenenfalls innen oder außen am Kamin (12), der sich zwischen dem Rohrende (9c) und der Rückgewinnungskammer (13) befindet, angebracht. Die Rückgewinnungskammer besteht vorzugsweise aus einem Zylinder mit erheblich größerem Durchmesser als der des Ofenrohres, so daß die Fließgeschwindigkeit der Teilchen plötzlich abnimmt und sie sich absetzen, mit einem Gasauslaß (13a) und Pulverabnahmestelle (13b). Die fakultative Vorrichtung (14) steht für eine weitere Kühlvorrichtung mit ihrer Zu- und Ableitung (14a und 14b) für das Kühlmedium.

### Beispiel

### a) Herstellung des bevorzugt zu verwendenden Legierungspulvers:

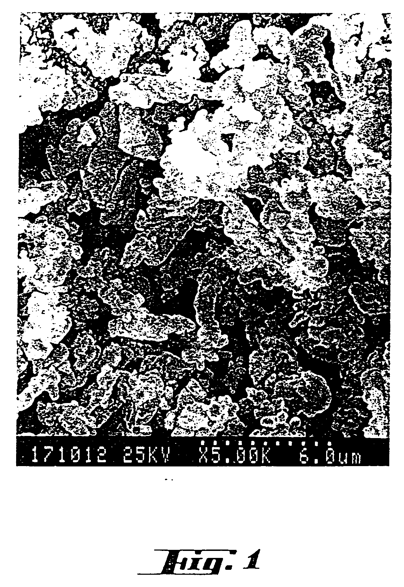

Das Ausgangspulver - siehe Fig. 1 - ist eine Silber-/Palladium-Legierung mit 30 Gew.-% Pd, die auf chemischem Weg mit anschließender thermomechanischer Behandlung hergestellt wurde.

Es besitzt folgende chemisch-physikalischen Eigenschaften:
- Morphologie: Agglomerate von 3 bis 4 »m, in Einzelfällen bis zu 17 »m.
- Spezifische Oberfläche: 1,8 m²/g (N₂-Gasadsorption)
- Oxidationsgrad: 60 bis 80 % des enthaltenden Palladiums wird bei der maximalen Oxidationstemperatur oxidiert.

Versuchsbedingungen:
- Vorrichtung gemäß Fig. 3
- Trägergas: Argon, Durchsatz 5 l/min.
- Drehgeschwindigkeit des Rotors: 3000 U/Min.
- Ofentemperatur: 1460 °C

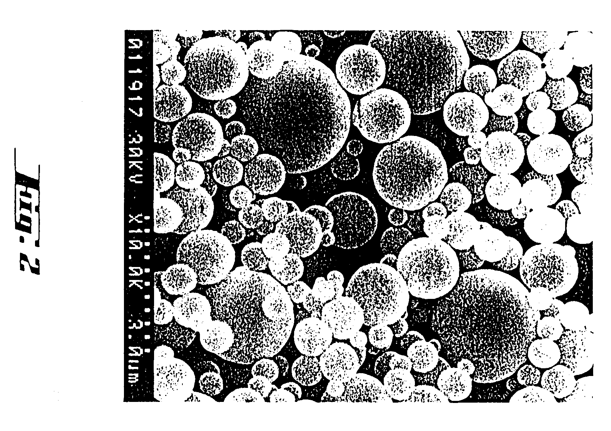

Die erhaltenen Teilchen sind vollkommen kugelförmig - siehe Fig. 2; die Korngröße liegt zwischen 0,2 und 3 »m, die spezifische Oberfläche beträgt 0,43 m²/g (Elektronenmikroskop). Die Teilchen des Pulvers sind vollkommen homogen; die chemische Zusammensetzung hat sich nicht geändert.

Der Oxidationsgrad des enthaltenden Palladiums liegt bei 30 % bei der maximalen Oxidationstemperatur von 575 °C. Die bei 1100 °C gemessene Schwindung beträgt 12 % gegenüber 40 % des Ausgangspulvers. Der lineare Wärmeausdehnungskoeffizient zwischen 0 und 900 °C liegt nahe and dem des massiven Materials, d. h. 1,68 × 10⁻⁵/°C.

### b) Herstellung von Kondensatoren (Erfindung):

Das Ausgangspulver (Fig. 1) und das nach a) erhaltene Pulver (Fig. 2) wurden jeweils zur Herstellung der Innenelektroden von keramischen Vielschichtkondensatoren eingesetzt und die Kondensatoren nach dem beanspruchten Verfahren gefertigt:

Die Chips auf Basis des Ausgangspulvers zeigten einige winzige Metall-Inseln sowie teilweises Aufblättern der Schichten nach dem Sintern des Schichtverbundes aus Leiter- und Nichtleiterschichten bei 1150 °C.

Die Chips auf Basis des kugelförmigen Pulvers nach Fig. 2 zeigen kein Aufblättern nach dem Sintern bei 1150 °C.

## Patentansprüche

1. Verfahren zur Herstellung von elektronischen Bauteilen, welche einen Verbund aus Nichtleiter-und Leiterschichten bilden, umfassend die folgenden Schritte:
a) Auftrag einer Schicht, enthaltend Metallpulver oder Metallegierungspulver in einem organischen Medium, auf einen gegossenen, ungebrannten Körper aus sinterbarem Keramikmaterial und
b) Sintern des derart beschichteten Körpers bei einer Temperatur, die mindestens der Sintertemperatur des Keramikmaterials entspricht und die unterhalb des Schmelzpunkts der Metalle oder Metallegierungen liegt,
dadurch gekennzeichnet,
daß man Metallpulver oder Metallegierungspulver einsetzt, deren Teilchen mikrokristallin, kugelförmig und dicht, d.h. poren- und rissefrei, sind, die eine glatte Oberfläche aufweisen und deren mittlerer Durchmesser zwischen 0,1 und 50 »m liegt.

2. Verfahren nach Anspruch 1.
dadurch gekennzeichnet,
daß man als Metall die Edelmetalle Silber, Gold, Palladium und Platin und als Metallegierung die binären und ternären Legierungen der genannten Edelmetalle, vorzugsweise Pd-Ag-Legierungen, verwendet.

3. Verfahren nach Anspruch 1 und 2,
dadurch gekennzeichnet,
daß die Pulver der Metalle oder Metallegierungen ein Kornspektrum im Bereich von 0, 1 »m bis weniger als 5 »m aufweisen.

4. Verfahren nach einem der Ansprüche 1 bis 3,
dadurch gekennzeichnet,
daß der ungebrannte Gießkörper aus einer dünnen Schicht sinterbarer Keramik besteht, die vor dem Sintern auf einer oder beiden Seiten beschichtet wird.

5. Verfahren nach Anspruch 4,
dadurch gekennzeichnet,
daß man einen Block aus abwechselnden Schichten aus ungebrannter Keramik und Metall- oder Metallegierungspulver enthaltenden Schichten aufbaut und den Schichtblock sintert.

6. Verfahren nach einem der Ansprüche 3 bis 5,
dadurch gekennzeichnet,
daß die elektronischen Bauteile keramische Vielschichtkondensatoren sind, deren Elektroden vorzugsweise aus den Edelmetallen Ag, Au, Pd, Pt, oder Nickel oder deren Legierungen bestehen.

## Claims

1. Process for producing electronic components which form a composite arrangement of nonconductor and conductor layers, comprising the following steps:
a) applying a layer containing metal powder or metal alloy powder in an organic medium to a cast unfired body of ceramic material which can be sintered; and
b) sintering the body coated in this way at a temperature which corresponds at least to the sintering temperature of the ceramic material and which is below the melting point of the metals or metal alloys;
characterized in that metal powders or metal alloy powders are used of which the particles are microcrystalline, spherical and dense, i.e. free of cracks and pores, which have a smooth surface and of which the average diameter is between 0.1 and 50 »m.

2. Process according to Claim 1, characterized in that the precious metals silver, gold, palladium and platinum are used as metal and the binary and ternary alloys of said precious metals, preferably Pd-Ag alloys, are used as metal alloy.

3. Process according to Claims 1 and 2, characterized in that the powders of the metals or metal alloys have a grain spectrum in the range of 0.1 »m to less than 5 »m.

4. Process according to any one of Claims 1 to 3, characterized in that the unfired cast body consists of a thin layer of ceramics which can be sintered and which is coated on one or both sides before sintering.

5. Process according to Claim 4, characterized in that a block of alternating layers of unfired ceramics and layers containing metal or metal alloy powder is built up and the layered block is sintered.

6. Process according to any one of Claims 3 to 5, characterized in that the electronic components are ceramic multilayered capacitors of which the electrodes preferably consist of the precious metals Ag, Au, Pd, Pt or nickel or their alloys.

## Revendications

1. Procédé de production de composants électroniques, notamment de condensateurs céramiques multicouches qui forment un composite de couches conductrices et non conductrices, ce procédé comprend les étapes suivantes :
a) dépôt d'une couche d'une poudre métallique ou d'une poudre d'alliage métallique sur un corps cru coulé en matériau céramique frittable et ;
b) fritter le corps ainsi enduit à une température qui correspond au moins à la température de frittage du matériau céramique et qui se trouve en-dessous du point de fusion du métal ou des alliages métalliques, caractérisé en ce qu'on utilise des poudres métalliques ou des poudres d'alliage métalliques dont les particules sont microcristallines sphériques et denses, c'est-à-dire sans pore et fissures, elles présentent une surface lisse, leur diamètre moyen est compris entre 0,1 et 50 »m.

2. Procédé selon la revendication 1, caractérisé en ce qu'on utilise comme métal : l'argent, l'or, le palladium et le platine, et les alliages binaires et ternaires des métaux précieux cités, de préférence les alliages Pd, Ag.

3. Procédé selon la revendication 1 et 2, caractérisé en ce que les poudres des métaux ou alliages de métaux présentent une répartition granulométrique comprise entre 0,1 »m et moins de 5 »m.

4. Procédé selon l'une des revendications 1 à 3, caractérisé en ce que le corps coulé cru est constitué d'une couche de céramique frittable, qu'on enduit avant le frittage sur une face ou les deux.

5. Procédé selon la revendication 4, caractérisé en ce qu'on fritte un bloc de couches alternées de céramique crue et de poudre métallique ou de poudre d'alliage métallique et on fritte le bloc feuilleté.

6. Procédé selon l'une des revendications 3 à 5, caractérisé en ce que les composants électroniques sont des condensateurs céramiques multicouches, dont les électrodes sont constituées de préférence de métaux précieux Ag, Au, Pd, Pt ou nickel ou de leurs alliages.
